(19) Europäisches Patentamt
European Patent Office
Office européen des brevets

(11) **EP 2 924 403 A1**

(12) **EUROPÄISCHE PATENTANMELDUNG**

(43) Veröffentlichungstag:
30.09.2015 Patentblatt 2015/40

(51) Int Cl.:
**G01J 5/20** (2006.01)

(21) Anmeldenummer: **15157837.4**

(22) Anmeldetag: **05.03.2015**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA**

(30) Priorität: **28.03.2014 DE 102014205863**

(71) Anmelder: **ROBERT BOSCH GMBH**
**70442 Stuttgart (DE)**

(72) Erfinder: **Utermoehlen, Fabian**
**70197 Stuttgart (DE)**

(54) **Sensorvorrichtung, Herstellungsverfahren für eine Sensorvorrichtung und Verfahren zum Ermitteln einer Information bezüglich einer Temperatur und/oder bezüglich einer Strahlung**

(57) Die Erfindung betrifft eine Sensorvorrichtung mit einem Substrat (10) mit mindestens einer darin ausgebildeten Kaverne (12), mindestens einer temperatursensitiven Sensoreinrichtung (14), welche mittels mindestens einer Aufhängungsstruktur (16) an und/oder über der mindestens einen zugeordneten Kaverne (12) aufgehängt ist, und einer Betreiberelektronik (18), wobei die mindestens eine temperatursensitive Sensoreinrichtung (14) jeweils mindestens einen MOSFET (20) umfasst, und wobei die Betreiberelektronik (18) dazu ausgelegt ist, jeweils eine Betreiberspannung (Uds, Ugs) des mindestens einen MOSFET (20) zwischen dessen Drain-Kontakt (26) und dessen Source-Kontakt (22) und/oder zwischen dessen Gate-Kontakt (24) und dessen Source-Kontakt (22) anzulegen und unter Berücksichtigung mindestens eines Drainstroms (Id) des mindestens einen MOSFET (20) eine Information bezüglich einer Temperatur und/oder bezüglich einer Strahlung festzulegen und auszugeben. Ebenso betrifft die Erfindung ein Herstellungsverfahren für eine Sensorvorrichtung. Des Weiteren betrifft die Erfindung ein Verfahren zum Ermitteln einer Information bezüglich einer Temperatur und/oder bezüglich einer Strahlung.

**Fig. 1a**

EP 2 924 403 A1

## Beschreibung

Die Erfindung betrifft eine Sensorvorrichtung und ein Herstellungsverfahren für eine Sensorvorrichtung. Des Weiteren betrifft die Erfindung ein Verfahren zum Ermitteln einer Information bezüglich einer Temperatur und/oder bezüglich einer Strahlung.

Stand der Technik

In der DE 10 2006 028 435 A1 sind ein Sensor und ein Verfahren zu seiner Herstellung beschrieben. Der Sensor umfasst ein Substrat mit mindestens einer darin ausgebildeten Kaverne und mindestens einem temperatursensitiven Pixel, welches mittels elastischer Aufhängefedern über der mindestens einen zugeordneten Kaverne aufgehängt ist. Das mindestens eine temperatursensitive Pixel ist derart ausgebildet, dass mindestens eine seiner elektrischen Eigenschaften bei einer Variierung einer daran und/oder in der mindestens einen zugeordneten Kaverne vorliegenden Temperatur variiert. Auf diese Weise ist ein von dem mindestens einen temperatursensitiven Pixel an eine Betreiberelektronik bereitstellbares Stromsignal variierbar. Das mindestens eine temperatursensitive Pixel soll zur direkten Temperatursensierung verwendbar sein. Ergänzend kann ein Absorptionsmaterial zur Absorption von Infrarotstrahlung auf das mindestens eine temperatursensitive Pixel aufgebracht sein, wodurch das mindestens eine temperatursensitive Pixel auch zur (indirekten) Sensierung von Infrarotstrahlung ausbildbar sein soll.

Offenbarung der Erfindung

Die Erfindung schafft eine Sensorvorrichtung mit den Merkmalen des Anspruchs 1, ein Herstellungsverfahren für eine Sensorvorrichtung mit den Merkmalen des Anspruchs 8 und ein Verfahren zum Ermitteln einer Information bezüglich einer Temperatur und/oder bezüglich einer Strahlung mit den Merkmalen des Anspruchs 9.

Vorteile der Erfindung

Die Erfindung stellt die Vorteile eines MOSFET (Metall-Oxid-Halbleiter-Feldeffekttransistor, Metal-Oxide-Semiconductor Field-Effect-Transistor) gegenüber herkömmlichen temperatursensitiven Sensoreinrichtungen, wie beispielsweise temperatursensitiven Diodenpixeln, für eine direkte Temperaturmessung mittels des mindestens einen MOSFET oder eine indirekte Strahlungsmessung mittels einer zusätzlichen Verwendung einer strahlungsabsorbierenden Schicht sicher.

Insbesondere kann eine Sensorempfindlichkeit/Nachweisempfindlichkeit mittels der vorliegenden Erfindung optimiert werden. Während bei herkömmlichen temperatursensitiven Pixeln mit Dioden deren Sensitivität kaum variierbar ist, kann die Sensitivität des mindestens einen MOSFET innerhalb eines vergleichsweise großen Wertebereichs auf einen bevorzugten Wert eingestellt werden. Somit entfällt bei einer Nutzung der vorliegenden Erfindung die herkömmliche Notwendigkeit, für ein Einstellen der Sensitivität eines temperatursensitiven Sensorelements mehrere Dioden in einer Serienschaltung zu kombinieren, um deren Temperatursensitivität additiv zu erhöhen.

Das mittels der vorliegenden Erfindung realisierbare Entfallen einer Verwendung einer Serienschaltung aus mehreren Dioden gewährleistet auch Möglichkeiten zum Minimieren der erfindungsgemäßen Sensorvorrichtung. Da die mindestens eine temperatursensitive Sensoreinrichtung mit dem mindestens einen MOSFET vergleichsweise platzsparend ausbildbar ist, ist eine Reduzierung der Größe und des Gewichts der erfindungsgemäßen Sensorvorrichtung leicht machbar. Außerdem benötigt die in ihrer Größe reduzierte Sensorvorrichtung weniger Materialien und ist damit kostengünstiger herstellbar. Des Weiteren erleichtert die kleinere und leichtere Ausbildbarkeit der erfindungsgemäßen Sensorvorrichtung deren Positionierung an einer gewünschten Messposition. Es wird auch darauf hingewiesen, dass aufgrund der vergleichsweise platzsparenden Ausbildbarkeit der mindestens einen temperatursensitiven Sensoreinrichtung mit dem mindestens einen MOSFET eine kleinere und kostengünstigere Optik für die erfindungsgemäße Sensorvorrichtung verwendbar ist.

Die erfindungsgemäße Sensorvorrichtung ist wahlweise zum direkten Messen einer Temperatur/Temperaturverteilung oder zum (indirekten) Ermitteln einer Strahlungsdichte/Strahlungsdichteverteilung (unter einer Verwendung mindestens einer auf/in der temperatursensitiven Sensoreinrichtung abgeschiedenen strahlungsabsorbierenden Schicht) ausbildbar. Die Sensorvorrichtung kann somit für eine Vielzahl von Verwendungszwecken eingesetzt werden.

Die Betreiberelektronik der erfindungsgemäßen Sensorvorrichtung ist dazu ausgelegt, die Informationen bezüglich der Temperatur und/oder bezüglich der Strahlung unter Berücksichtigung des mindestens einen Drainstroms des mindestens einen MOSFET festzulegen und auszugeben. Die Sensorvorrichtung kann somit den Vorteil nutzen, dass der mindestens eine Drainstrom des mindestens einen MOSFET in vielen Fällen stark temperaturabhängig ist. Dies erleichtert eine Auswertung des mindestens einen Drainstroms des mindestens einen MOSFET. Prinzipiell basiert die Temperaturabhängigkeit eines Drainstroms eines MOSFET auf folgenden halbleiterphysikalischen Effekten: einem temperaturabhängigen Bandabstand, einer temperaturabhängigen Ladungsträgerbeweglichkeit und einer temperaturabhängigen Ladungsträgeranzahl. (Je nach Spannung und Ladungsträgertransportmechanismus sind jeweils einige Komponenten vernachlässigbar oder kompensieren sich gegenseitig.) Dies kann somit bei einer Verwendung der vorliegenden Erfindung genutzt werden.

In einer vorteilhaften Ausführungsform ist die Betreiberelektronik zusätzlich dazu ausgelegt, an den mindestens einen MOSFET der mindestens einen temperatursensitiven Sensoreinrichtung eine Betreiberspannung größer Null und kleiner als eine für den mindestens einen jeweiligen MOSFET vorgegebene Schwellspannung anzulegen. Somit kann der Vorteil genutzt werden, dass der mindestens eine Drainstrom des mindestens einen MOSFET für Betreiberspannungen größer Null und kleiner als die für den mindestens einen jeweiligen MOSFET vorgegebene Schwellspannung stark temperaturabhängig ist. Wie unten genauer ausgeführt wird, kann eine Temperatursensitivität bei der hier beschriebenen Ausführungsform der Sensorvorrichtung höher als bei herkömmlichen temperatursensitiven Bauelementen liegen. Eine Auswertung des mindestens einen Drainstroms ist somit relativ einfach ausführbar. Außerdem können bei der hier beschriebenen Ausführungsform der Sensorvorrichtung auch kostengünstige Bauteile zum Herstellen der Betreiberelektronik verwendet werden.

In einer besonders vorteilhaften Ausführungsform ist die Betreiberelektronik zusätzlich dazu ausgelegt, an den mindestens einen MOSFET der mindestens einen temperatursensitiven Sensoreinrichtung unterschiedliche Spannungswerte größer Null als Betreiberspannung anzulegen, und unter Berücksichtigung des als Betreiberspannung angelegten Spannungswerts eine Auswerterelation aus einer Wertemenge mit mindestens zwei Auswerterelationen auszuwählen, und die Information unter Berücksichtigung des mindestens einen Drainstroms und der ausgewählten Auswerterelation festzulegen. Dabei nutzt die Sensorvorrichtung den Vorteil, dass die Temperatursensitivität des mindestens einen Drainstroms mittels der angelegten Gate-Source-Spannung variierbar ist. Insbesondere kann auf diese Weise die Temperatursensitivität so angepasst werden, dass immer ein ausreichend hoher Drainstrom, welcher sich leicht und verlässlich auswerten lässt, zur Verfügung steht.

Beispielsweise kann der mindestens eine MOSFET der mindestens einen temperatursensitiven Sensoreinrichtung ein selbstsperrender n-Kanal MOSFET sein. Somit wird keine zusätzliche Schaltmatrix zum Auswählen eines MOSFET aus einer Vielzahl von MOSFET benötigt. Dies erlaubt eine zusätzliche Reduzierung einer Größe/eines Bauraumbedarfs der Sensorvorrichtung und reduziert deren Herstellungskosten.

Außerdem kann der mindestens eine MOSFET der gleichen temperatursensitiven Sensoreinrichtung so ausgebildet sein, dass dessen Gate-Kontakt und dessen Drain-Kontakt auf einem gleichen Potential liegen. Die Vorteile einer derartigen Ausbildung des mindestens einen MOSFET werden unten noch ausgeführt.

In einer weiteren vorteilhaften Ausführungsform münden an dem mindestens einen MOSFET der gleichen temperatursensitiven Sensoreinrichtung ausschließlich zwei Leitungen. Man kann dies auch damit umschreiben, dass der mindestens eine MOSFET der gleichen Sensoreinrichtung über ausschließlich zwei Leitungen an die sensorvorrichtungseigene oder externe Betreiberelektronik anbindbar/angebunden ist. Obwohl es sich bei einem MOSFET um ein vierpoliges Bauelement handelt, reichen zwei nach außen geführte Leitungen aus, um das Bauelement mit der Betreiberelektronik zu verbinden. Aufgrund der Anbindung des mindestens einen MOSFET der gleichen Sensoreinrichtung an nur die zwei daran mündenden Leitungen ist eine gute thermische Entkopplung von diesem gewährleistet, was eine vorteilhafte Sensor-Performance von diesem ermöglicht.

Die Sensorvorrichtung kann z.B. ein Temperatursensorbauteil, ein Temperatursensor, ein Strahlungssensorbauteil, ein Strahlungssensor, ein Infrarotsensorbauteil, ein Infrarotsensor und/oder eine Wärmebildkamera sein. Somit können die in den vorausgehenden Absätzen beschriebenen Vorteile für eine Vielzahl von Verwendungen genutzt werden.

Die oben beschriebenen Vorteile sind auch bei einem entsprechenden Herstellungsverfahren für eine Sensorvorrichtung gewährleistet. Das Herstellungsverfahren ist gemäß den oben beschriebenen Ausführungsformen der Sensorvorrichtung weiterbildbar.

Des Weiteren realisiert auch das Ausführen des korrespondierenden Verfahrens zum Ermitteln/Messen einer Information bezüglich einer Temperatur und/oder bezüglich einer Strahlung die oben beschriebenen Vorteile. Auch das Verfahren ist gemäß den oben beschriebenen Ausführungsformen der Sensorvorrichtung weiterbildbar.

Kurze Beschreibung der Zeichnungen

Weitere Merkmale und Vorteile der vorliegenden Erfindung werden nachfolgend anhand der Figuren erläutert. Es zeigen:

Fig. 1a bis 1d    schematische Darstellungen und ein Koordinatensystem zum Erläutern eines Aufbaus und einer Funktionsweise einer ersten Ausführungsform der Sensorvorrichtung;

Fig. 2    eine schematische Darstellung einer zweiten Ausführungsform der Sensorvorrichtung;

Fig. 3    ein Flussdiagramm zum Erläutern einer Ausführungsform des Herstellungsverfahrens für eine Sensorvorrichtung; und

Fig. 4    ein Flussdiagramm zum Erläutern einer Ausführungsform des Verfahrens zum Ermitteln einer Information bezüglich einer Temperatur und/oder bezüglich einer Strahlung.

Ausführungsformen der Erfindung

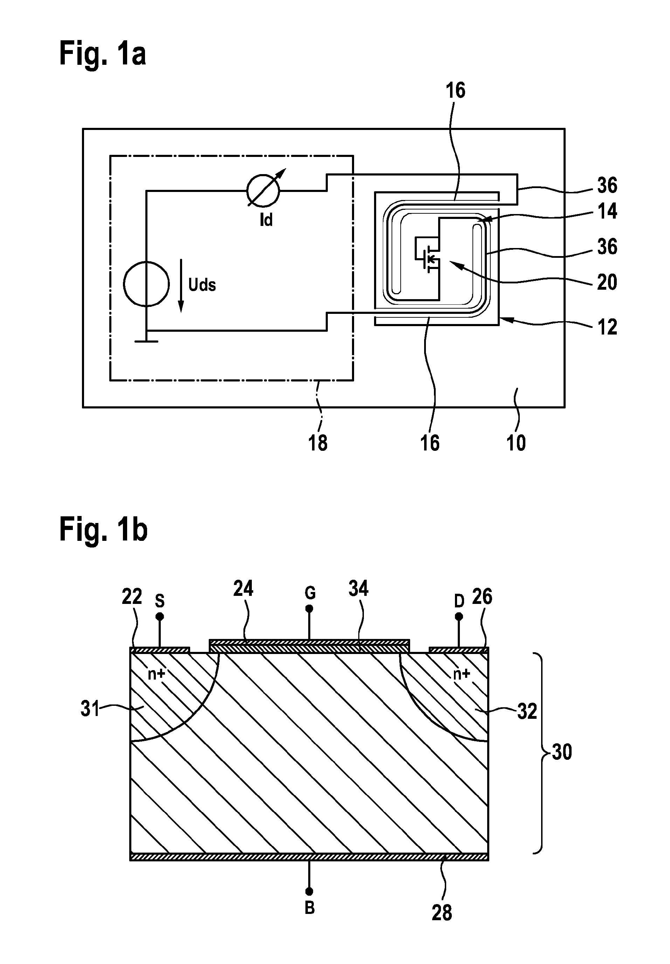

Fig. 1a bis 1d zeigen schematische Darstellungen und ein Koordinatensystem zum Erläutern eines Aufbaus und einer Funktionsweise einer ersten Ausführungsform der Sensorvorrichtung.

Die in Fig. 1a schematisch dargestellte Sensorvorrichtung umfasst ein Substrat 10 mit mindestens einer darin ausgebildeten Kaverne 12. Außerdem hat die Sensorvorrichtung mindestens eine temperatursensitive Sensoreinrichtung 14, welche mittels mindestens einer die mindestens eine zugeordnete Kaverne 12 zumindest teilweise überspannenden Aufhängungsstruktur 16 an und/oder über der mindestens einen zugeordneten Kaverne 12 aufgehängt ist. Die mindestens eine Aufhängungsstruktur 16 kann beispielsweise eine elastische Aufhängefeder sein. Es wird jedoch darauf hingewiesen, dass die Ausführbarkeit der Sensorvorrichtung nicht auf eine bestimmte Form der mindestens einen Kaverne 12 oder der mindestens einen Aufhängungsstruktur 16 limitiert ist. Auch für das Substrat 10 kann eine Vielzahl verschiedener Substrate, wie beispielsweise ein kostengünstiges Siliziumsubstrat, eingesetzt werden.

Die mindestens eine temperatursensitive Sensoreinrichtung 14 ist derart ausgebildet, dass mindestens eine elektrische Eigenschaft der jeweiligen temperatursensitiven Sensoreinrichtung 14 bei einer Variierung einer an und/oder in der jeweiligen temperatursensitiven Sensoreinrichtung 14 und/oder der mindestens einen zugeordneten Kaverne 12 vorliegenden Temperatur variiert. Die Sensorvorrichtung hat auch eine Betreiberelektronik 18, an welche mindestens ein Stromsignal von der mindestens einen temperatursensitiven Sensoreinrichtung 14 bereitstellbar ist. Das mindestens eine Stromsignal der mindestens einen temperatursensitiven Sensoreinrichtung 14 ist bei einer Variierung der mindestens einen elektrischen Eigenschaft der jeweiligen temperatursensitiven Sensoreinrichtung 14 variierbar. In der Ausführungsform der Fig. 1a bis 1d ist die Betreiberelektronik 18 auf dem gleichen Substrat 10 wie die mindestens eine temperatursensitive Sensoreinrichtung 14 ausgebildet. Als Alternative dazu kann die Betreiberelektronik 18 jedoch auch auf einem anderen Träger ausgebildet sein. Die Betreiberelektronik 18 kann beispielsweise ein ASIC (Anwendungsspezifische integrierte Schaltung, Application Specific Integrated Circuit) sein. Anstelle eines ASIC können jedoch auch verschiedene andere kostengünstige Elektroniken für die Betreiberelektronik 18 eingesetzt werden.

Die mindestens eine temperatursensitive Sensoreinrichtung 14 umfasst jeweils mindestens einen MOSFET 20. Außerdem ist die Betreiberelektronik 18 dazu ausgelegt, jeweils eine Betreiberspannung Uds/Ugs des mindestens einen MOSFET 20 zwischen dessen Drain-Kontakt 26 und dessen Source-Kontakt 22 und/oder zwischen dessen Gate-Kontakt 24 und dessen Source-Kontakt 22 anzulegen. Unter der jeweiligen Betreiberspannung Uds/Ugs des mindestens einen MOSFET 20 kann somit eine angelegte Drain-Source-Spannung und/oder eine angelegte Gate-Source-Spannung des jeweiligen MOSFET 20 verstanden werden.) Die Vorteile einer derartigen Ausbildung der mindestens einen temperatursensitiven Sensoreinrichtung 14 und der Betreiberelektronik 18 werden unten noch genauer erläutert.

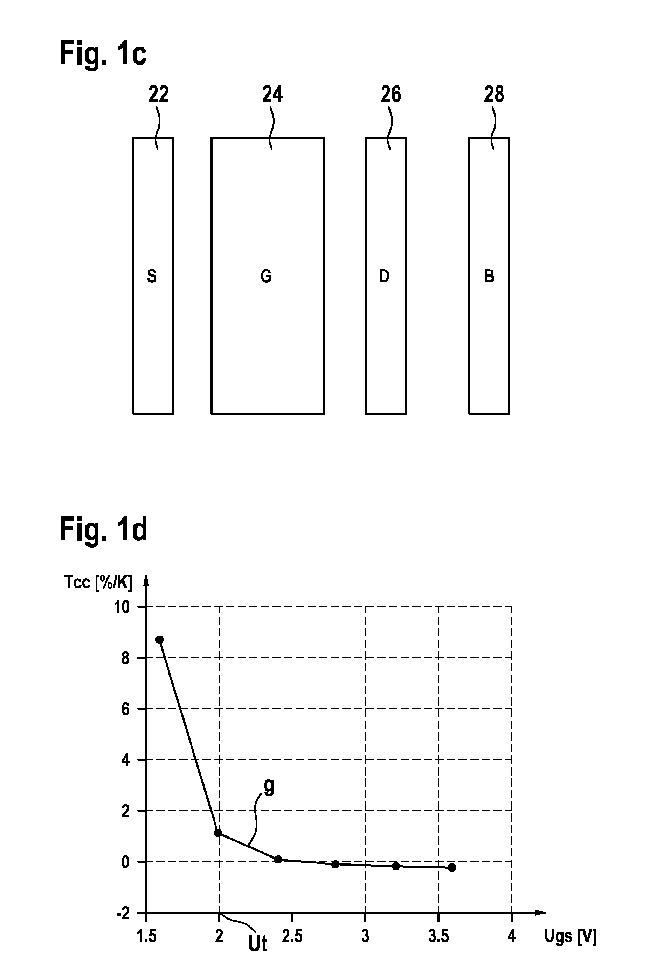

Fig. 1b zeigt einen Querschnitt durch den (mindestens einen) MOSFET 20 entlang einer Ebene, welche senkrecht zu einer mit dem (mindestens einen) MOSFET 20 bestückten Oberseite des Substrats 10 ausgerichtet ist. Der MOSFET 20 umfasst den Source-Kontakt 22, den Gate-Kontakt 24, den Drain-Kontakt 26 und einen Basis-Kontakt 28. Die Kontakte 22 bis 28 können z.B. aus (dotiertem) Polysilizium und/oder mindestens einem Metall, insbesondere aus Titansilizid, gebildet sein. In Fig. 1c ist eine Draufsicht auf die Kontakte 22 bis 28 gezeigt. Es wird jedoch darauf hingewiesen, dass die Formen und Lagen der Kontakte 22 bis 28 relativ frei wählbar sind.

Der MOSFET 20 kann in einer Halbleiterschicht/Halbleitermembran 30 ausgebildet sein, welche die Kaverne 12 zumindest teilweise überspannt und/oder über der Kaverne 12 aufgehängt ist. Die Halbleiterschicht/Halbleitermembran 30 kann z.B. eine Siliziumschicht/Siliziummembran 30, insbesondere eine epitaktisch aufgewachsene Siliziumschicht/Siliziummembran 30, sein.

Vorzugsweise ist der MOSFET 20 der mindestens einen temperatursensitiven Sensoreinrichtung 14 ein selbstsperrender n-Kanal MOSFET 20. Dazu können in der Halbleiterschicht/Halbleitermembran 30 ein n+-dotierter Source-Bereich 31 und ein n+-dotierter Drain-Bereich 32 ausgebildet sein. Der Source-Kontakt 22 kann auf dem Source-Bereich 31 liegen. Entsprechend kann auch der Drain-Kontakt 26 auf dem Drain-Bereich 32 ausgebildet sein. Mindestens ein elektrisch isolierendes Material 34 kann zwischen den Kontakten 22 und 26 abgeschieden sein. Auf dem mindestens einen elektrisch isolierenden Material 34 kann der Gate-Kontakt 24 liegen. Für das mindestens eine elektrisch isolierende Material 34 kann beispielsweise Siliziumdioxid verwendet werden. Es wird jedoch darauf hingewiesen, dass eine Vielzahl verschiedener elektrisch isolierender Materialien zum Ausbilden des mindestens einen MOSFET 20 der mindestens einen temperatursensitiven Sensoreinrichtung 14 verwendbar ist.

Die Betreiberelektronik 18 ist dazu ausgelegt, unter Berücksichtigung des mindestens einen von der mindestens einen temperatursensitiven Sensoreinrichtung 14 bereitgestellten Stromsignals eine Information bezüglich einer Temperatur und/oder bezüglich einer Strahlung festzulegen und auszugeben. Die mindestens eine Information kann somit z.B. eine Temperatur, eine Temperaturverteilung, eine Strahlungsdichte und/oder eine Strahlungsdichteverteilung sein. Eine Strahlung kann (indirekt) auch mittels der mindestens einen temperatursensitiven Sensoreinrichtung 14 nachgewiesen/gemessen werden, sofern die Strahlung mittels der mindestens einen temperatursensitiven Sensoreinrichtung 14, bzw. mittels mindestens einer auf und/oder in der temperatursensitiven Sensoreinrichtung 14 abgeschiedenen strahlungsabsorbierenden Schicht absorbierbar ist. Beispielsweise kann zum Absorbieren der Strahlung eine strahlungsabsorbierende Schicht auf einer zu der mindestens einen zugeordneten Kaverne 12 zugewandten Seite der mindestens einen temperatursensitiven Sensoreinrichtung 14 liegen. Es wird aber darauf hingewiesen, dass bei einem Einsetzen der Sensorvorrichtung zum Messen einer Temperatur/Temperaturverteilung keine strahlungsabsorbierende Schicht notwendig ist.

Die Sensorvorrichtung eignet sich auch gut zum Nachweisen/Ermitteln einer Infrarotstrahlung. Gemäß des Plankschen Gesetzes emittiert jedes Objekt mit einer Temperatur um die Raumtemperatur (300 K) elektromagnetische Strahlung mit einem Schwerpunkt im Ferninfrarotbereich, d.h. in einem Wellenlängenbereich zwischen 8 $\mu$m bis 14 $\mu$m. In diesem Bereich ist die Absorption in der Atmosphäre nahezu vernachlässigbar, so dass die Sensorvorrichtung die Infrarotstrahlung/Wärmestrahlung selbst über eine große Entfernung zum jeweiligen Objekt detektieren kann. Die Infrarotstrahlung/Wärmestrahlung kann z.B. mittels einer Siliziumdioxidschicht auf/in der mindestens einen temperatursensitiven Sensoreinrichtung 14 absorbiert werden, wodurch sich eine Temperatur an/in der jeweiligen temperatursensitiven Sensoreinrichtung 14 und/oder der mindestens einen benachbarten Kaverne 12 erhöht. Mittels eines Untersuchens der Temperatur kann somit ein Rückschluss auf die Infrarotstrahlungsdichte, bzw. eine Temperatur des jeweiligen Objekts, gezogen werden. Das bolometrische Prinzip (d.h. eine Detektion von Photonen durch eine Ermittlung der bei ihrer Absorption entstehenden Wärme) kann somit auch für die Sensorvorrichtung genutzt werden. Die Sensorvorrichtung ist somit auch als Bolometer, speziell als Mikrobolometer, einsetzbar, wobei die Sensorvorrichtung ungekühlt betreibbar ist.

Außerdem ist die Betreiberelektronik 18 dazu ausgelegt, die Information bezüglich der Temperatur und/oder bezüglich der Strahlung unter Berücksichtigung mindestens eines Drainstroms Id des mindestens einen MOSFET 20 der mindestens einen temperatursensitiven Sensoreinrichtung 14 als das mindestens eine Stromsignal festzulegen und auszugeben. Der Drainstrom Id eines MOSFET 20 ist im Unterschwellspannung-Betrieb/Unterschwellspannung-Bereich (Subtreshold-Betrieb/Subtreshold-Bereich) stark temperaturabhängig. Dies kann man auch damit umschreiben, dass der Drainstrom Id eines MOSFET 20 bei einer Betreiberspannung/Betriebsspannung Uds/Ugs unterhalb einer für den jeweiligen MOSFET 20 vorgegebenen Schwellspannung Ut stark temperaturabhängig ist. Vorzugsweise ist deshalb die Betreiberelektronik 18 zusätzlich dazu ausgelegt, an den mindestens einen MOSFET 20 der mindestens einen temperatursensitiven Sensoreinrichtung 14 eine Betreiberspannung Uds/Ugs größer Null und kleiner als eine für den mindestens einen jeweiligen MOSFET 20 vorgegebene Schwellspannung Ut anzulegen.

Fig. 1d zeigt ein Koordinatensystem zum Erläutern einer Temperaturabhängigkeit Tcc des Drainstroms Id von der zwischen einem Drain-Kontakt/Drain-Bereich und einem Source-Kontakt/Source-Bereich eines MOSFET 20, bzw. dessen Gate-Kontakt/Gate-Bereich und dessen Source-Kontakt/Source-Bereich, anliegenden Betreiberspannung Uds/Ugs. Mittels der Abszisse des Koordinatensystems der Fig. 1d ist eine zwischen dem Gate-Kontakt und dem Source-Kontakt des jeweiligen MOSFET 20 anliegende Betreiberspannung Ugs (in V) wiedergegeben. (Vorzugsweise ist die Drain-Source-Spannung Uds gleich der Betreiberspannung/Gate-Source-Spannung Ugs. Dazu kann der mindestens eine MOSFET 20 der gleichen temperatursensitiven Sensoreinrichtung 14 so ausgebildet ist, dass dessen Gate-Kontakt 24 und dessen Drain-Kontakt 26 auf einem gleichen Potential liegen.) Die Koordinate des Koordinatensystems der Fig. 1d zeigt die zugehörigen Werte für die Temperatursensitivität Tcc (in %/K) des Drainstroms Id an.

Wie anhand des Graphen g des Koordinatensystems der Fig. 1d erkennbar, nimmt die Temperatursensitivität Tcc des Drainstroms Id als Funktion der angelegten Betreiberspannung Ugs unterhalb der Schwellspannung Ut relativ hohe Werte an. Über die Betreiberspannung Ugs kann deshalb die Temperaturempfindlichkeit Tcc des Drainstroms Id auf einen gewünschten Wert eingestellt werden. Vorzugsweise ist die Drain-Source-Spannung Uds größer als eine Differenz der Betreiberspannung/Gate-Source-Spannung Ugs und der Schwellspannung Ut gemäß Gleichung (Gl. 1) mit:

$$(\text{Gl. 1}) \quad Uds > Ugs - Ut$$

Dies ist bei einer Gleichheit der Drain-Source-Spannung Uds und der Betreiberspannung/Gate-Source-Spannung Ugs leicht erfüllbar. Ein stabiler Betrieb der Sensorvorrichtung und eine konstante Temperatursensitivität Tcc des Drainstroms Id sind somit leicht gewährleistbar.

Vorzugsweise ist die Betreiberelektronik 18 zusätzlich dazu ausgelegt, an den mindestens einen MOSFET 20 der mindestens einen temperatursensitiven Sensoreinrichtung 14 unterschiedliche Spannungswerte größer Null, insbesondere unterschiedliche Spannungswerte größer Null und kleiner als die jeweilige Schwellspannung Ut, als Betreiberspannung Uds/Ugs anzulegen. Insbesondere kann während eines Betriebs der Sensorvorrichtung mittels des Variierens der Betreiberspannung Uds/Ugs eine Nachregelung ausgeführt werden. Bei besonders hohen Temperatursignalen, z.B.

wenn die Sensorvorrichtung direkt zu der Sonne oder einer anderen Wärmequelle ausgerichtet ist, kann die Temperatursensitivität Tcc des mindestens einen MOSFET 20 mittels des Variierens der Betreiberspannung Uds/Ugs reduziert werden. Entsprechend kann, wenn der mindestens eine ermittelte Drainstrom Id für eine verlässliche Auswertung zu gering ist, die Temperatursensitivität Tcc des mindestens einen MOSFET 20 mittels des Variierens der Betreiberspannung Uds/Ugs gesteigert werden.

Sofern die Betreiberelektronik 18 dazu ausgelegt ist, an den mindestens einen MOSFET 20 der mindestens einen temperatursensitiven Sensoreinrichtung 14 unterschiedliche Spannungswerte größer Null als Betreiberspannung Uds/Ugs anzulegen, kann unter Berücksichtigung des als Betreiberspannung Uds/Ugs angelegten Spannungswerts eine Auswerterelation aus einer Wertemenge mit mindestens zwei Auswerterelationen auswählbar sein. Anschließend wird die Information unter Berücksichtigung des mindestens einen Drainstroms Id und der ausgewählten Auswerterelation festgelegt. Somit kann bei der Festlegung der Information die mit dem Variieren der Betreiberspannung Uds/Ugs geänderte Temperatursensitivität Tcc direkt oder indirekt mitberücksichtigt werden. Beispielsweise können ein an den angelegten Spannungswert der Betreiberspannung Uds/Ugs angepasster Temperaturkoeffizient oder ein entsprechender Umrechnungsfaktor zum Umrechnen des Drainstroms Id in eine Strahlungsdichte herangezogen werden.

Die sehr hohe Temperatursensitivität Tcc kann damit während eines Betriebs der Sensorvorrichtung elektrisch nachgeregelt werden. Außerdem liegt die Temperatursensitivität Tcc in der Regel Größenordnungen über resistiven Sensorprinzipien. Mittels der hier beschriebenen Sensorvorrichtung können somit genauere/verlässlichere Werte ermittelt werden. Ein Übersteuern der Sensorvorrichtung bei großen Stromsignalen ist ausgeschlossen. Natürlich kann die Empfindlichkeit der Steuervorrichtung je nach spezifischer Anwendung auch fest eingestellt werden.

Die vorteilhafte Variierbarkeit der Temperatursensitivität Tcc des mindestens einen MOSFET 20 mittels des Variierens der Betreiberspannung Uds/Ugs macht somit eine herkömmlicherweise oft eingesetzte Serienschaltung aus mehreren Nachweiselementen (wie z.B. Dioden) überflüssig. Die mindestens eine temperatursensitive Sensoreinrichtung 14 weist deshalb im Vergleich zu den herkömmlichen temperatursensitiven Pixeln (aus mehreren Nachweiselementen/Dioden) ein enormes Miniaturisierungspotential auf. Deshalb ist der Größe/Fläche der mindestens einen temperatursensitiven Sensoreinrichtung 14 (abgesehen von einer Absorptionsfläche) quasi keine untere Grenze gesetzt.

Außerdem tritt bei der mindestens einen temperatursensitiven Sensoreinrichtung 14 nicht der Nachteil einer Serienschaltung von Dioden auf. Bei einer Serienschaltung von Dioden werden die Spannungen über den Dioden in Vorwärtsrichtung häufig für eine Verarbeitung/Auswertung zu groß. Die für das Ansteuern des mindestens einen MOSFET 20 benötigte Betreiberspannung Uds/Ugs liegt hingegen in der Regel unter 2,5 V, häufig unter 1 V, so dass prinzipiell auch Low-Power ASIC-Prozesse zum Anlegen der Betreiberspannung Uds/Ugs verwendbar sind. Diese Prozesse sind vor allem für mobile Anwendungen mit begrenztem Energiespeicher vorteilhaft.

Zusätzlich kann für die hier beschriebene Sensorvorrichtung bei einer gleichen Auflösung (bzw. bei einer gleichen Anzahl von Pixeln) eine kleinere und damit günstigere Optik verwendet werden. Ebenso können Bauelemente mit einem erheblichen Miniaturisierungspotential für die hier beschriebene Sensorvorrichtung verwendet werden. Dadurch ergeben sich Sensorelemente mit sehr kleiner thermischer Masse, die demzufolge sehr kurze Reaktionszeiten aufweisen. Dies ist vor allem für eine Anwendung im Automotive-Umfeld vorteilhaft.

Wie in Fig. 1a erkennbar ist, münden vorzugsweise ausschließlich zwei Leitungen 36 an dem mindestens eine MOSFET 20 der gleichen temperatursensitiven Sensoreinrichtung 1. Obwohl es sich bei dem MOSFET 20 um ein vierpoliges Bauelement handelt, reichen die zwei nach außen geführten Leitungen 36 aus, um den MOSFET 20 mit der Betreiberelektronik 18 zu verbinden. Damit sind lediglich zwei Leitungen 36 pro temperatursensitiver Sensoreinrichtung 14 zum Kontaktieren, Ansteuern und Betreiben der mindestens einen temperatursensitiven Sensoreinrichtung 14 ausreichend. Auch zum Ermitteln des jeweiligen Drainstroms Id jeder temperatursensitiven Sensoreinrichtung 14 sind die zwei (die jeweilige temperatursensitive Sensoreinrichtung 14 kontaktierenden) Leitungen 36 ausreichend. Die beiden direkt an der mindestens einen temperatursensitiven Sensoreinrichtung 14 mündenden Leitungen 36 können über die mindestens eine Aufhängungsstruktur 16 geführt sein. Die Notwendigkeit von lediglich zwei Leitungen 36 pro temperatursensitiver Sensoreinrichtung 14 verbessert die thermische Entkopplung eines jeden temperatursensitiven Sensorelements 14 und steigert damit dessen Nachweisgenauigkeit. (Eine hohe Temperaturempfindlichkeit/Strahlungsempfindlichkeit ist selbst bei einer Kanallänge um 0,5 $\mu$m noch gewährleistet.)

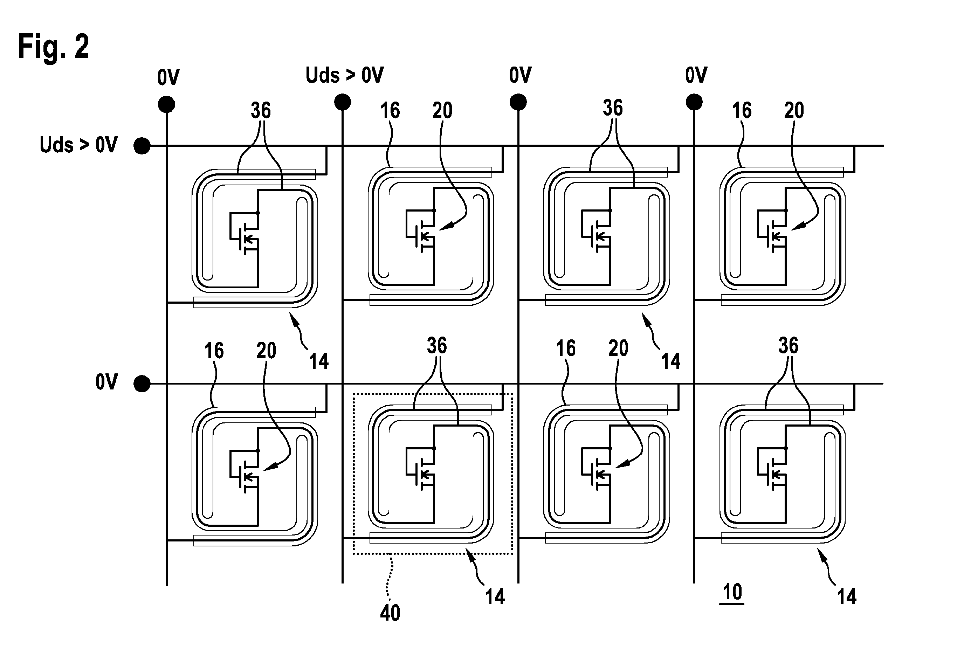

Fig. 2 zeigt eine schematische Darstellung einer zweiten Ausführungsform der Sensorvorrichtung.

Die Sensorvorrichtung der Fig. 2 weist ein zweidimensionales Array von temperatursensitiven Sensoreinrichtungen 14 auf, von denen jede mindestens einen MOSFET 20 hat. Die temperatursensitiven Sensoreinrichtungen 14 sind vorzugsweise in Reihen und Spalten angeordnet. Mittels der (nicht dargestellten) Betreibereinrichtung 18 wird die Betreiberspannung Uds/Ugs bereitgestellt und der Drainstrom Id als Sensorsignal gemessen. Da ein MOSFET 20 selbstsperrend ist, wird keine zusätzliche Schaltmatrix zum Auswählen eines der MOSFET 20 aus dem Array benötigt. Bei einem Anlegen einer negativen Spannung als Betreiberspannung Uds/Ugs (Ugs = Uds < 0 V) ergibt sich kein Stromfluss und der Drainstrom Id ist gleich Null. Damit kann gezielt eine der temperatursensitiven Sensoreinrichtungen 14 (in Fig. 2 die mit dem Rahmen 40 markierte) ausgewählt und von der Betreibereinrichtung 18 ausgewertet werden.

Alle oben beschriebenen Sensorvorrichtungen können ein Temperatursensorbauteil, ein Temperatursensor, ein Strahlungssensorbauteil, ein Strahlungssensor, ein Infrarotsensorbauteil, ein Infrarotsensor und/oder eine Wärmebildkamera sein. Insbesondere können alle oben beschriebenen Sensorvorrichtungen in Mikrobolometern für Automotive oder CI-Anwendungen eingesetzt werden. Außerdem kann ein FIR-Imager (Ferner-Infrarot-Imager) mittels jeder der Sensorvorrichtungen realisiert werden.

Somit ist eine Vielzahl von Einsatzmöglichkeiten für die Sensorvorrichtungen gewährleistet. Es wird außerdem darauf hingewiesen, dass jede der Sensorvorrichtungen leicht zusammen mit einem anderen Sensortyp, beispielsweise einem Drucksensor, in ein gemeinsames Halbleitersubstrat integrierbar ist.

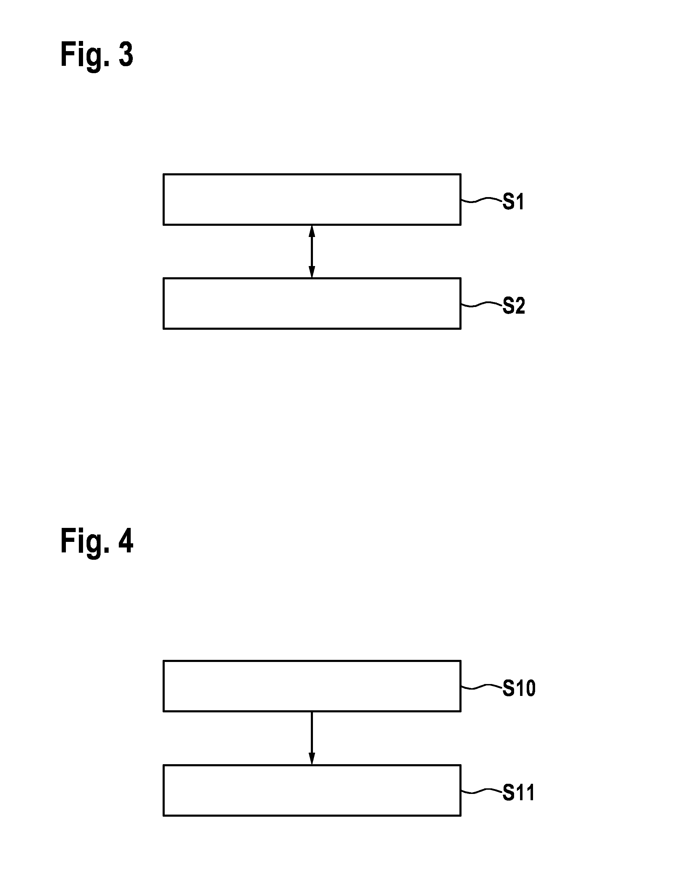

Fig. 3 zeigt ein Flussdiagramm zum Erläutern einer Ausführungsform des Herstellungsverfahrens für eine Sensorvorrichtung.

Beispielsweise können die oben beschriebenen Sensorvorrichtungen mittels der nachfolgend erläuterten Verfahrensschritte S1 und S2 hergestellt werden. Die Ausführbarkeit des Herstellungsverfahrens für eine Sensorvorrichtung ist jedoch nicht auf das Herstellen dieser Sensorvorrichtungen limitiert.

In einem Verfahrensschritt S1 wird mindestens eine temperatursensitive Sensoreinrichtung ausgebildet, wobei die mindestens eine temperatursensitive Sensoreinrichtung mittels mindestens einer Aufhängungsstruktur an und/oder über mindestens einer in einem Substrat ausgebildeten Kaverne aufgehängt wird. Die mindestens eine temperatursensitive Sensoreinrichtung wird außerdem derart ausgebildet, dass mindestens eine elektrische Eigenschaft der jeweiligen temperatursensitiven Sensoreinrichtung bei einer Variierung einer an und/oder in der jeweiligen temperatursensitiven Sensoreinrichtung und/oder der mindestens einen zugeordneten Kaverne vorliegenden Temperatur variiert. Außerdem wird die mindestens eine temperatursensitive Sensoreinrichtung jeweils mit mindestens einem MOSFET ausgebildet.

Vorzugsweise wird der mindestens eine MOSFET 20 in und auf einem epitaktisch aufgewachsenen Silizium ausgebildet. Dazu können Source- und Draingebiete in das epitaktisch aufgewachsene Silizium implantiert werden. Nach einer Gateoxidation kann eine ganzflächige Metallabscheidung ausgeführt werden. Danach können mittels einer Metallstrukturierung der Source-, Gate-, Basis- und Drain-Kontakt aus dem abgeschiedenen Metall herausstrukturiert werden.

In einem weiteren Verfahrensschritt S2 erfolgt ein Ausbilden einer Betreiberelektronik derart, dass die Betreiberelektronik dazu ausgelegt wird, bei einem Betrieb der Sensorvorrichtung jeweils eine Betreiberspannung des mindestens einen MOSFET zwischen dessen Drain-Kontakt und dessen Source-Kontakt und/oder zwischen dessen Gate-Kontakt und dessen Source-Kontakt anzulegen. Außerdem wird die Betreiberelektronik so ausgelegt, dass bei dem Betrieb der Sensorvorrichtung mindestens ein Stromsignal, welches bei einer Variierung der mindestens einen elektrischen Eigenschaft der jeweiligen temperatursensitiven Sensoreinrichtung variiert, von der mindestens einen temperatursensitiven Sensoreinrichtung an die Betreibereinrichtung bereitstellbar ist. Speziell ist mindestens ein Drainstroms des mindestens einen MOSFET als das mindestens eine Stromsignal an die Betreibereinrichtung bereitstellbar. Des Weiteren wird die Betreibereinrichtung dazu ausgelegt, bei dem Betrieb der Sensorvorrichtung unter Berücksichtigung des mindestens einen Drainstroms des mindestens einen MOSFET als das mindestens eine Stromsignal eine Information bezüglich einer Temperatur und/oder bezüglich einer Strahlung festzulegen und auszugeben. Die fertig hergestellte Sensorvorrichtung weist somit die oben schon beschriebenen Vorteile auf.

Die Verfahrensschritte S1 und S2 können in beliebiger Reihenfolge oder gleichzeitig ausgeführt werden. Die Verfahrensschritte S1 und S2 können auch als Teilschritte eines MEMS-Prozesses ausgeführt werden.

Fig. 4 zeigt ein Flussdiagramm zum Erläutern einer Ausführungsform des Verfahrens zum Ermitteln einer Information bezüglich einer Temperatur und/oder bezüglich einer Strahlung.

In einem Verfahrensschritt S10 wird eine Betreiberspannung an mindestens einen MOSFET, welcher mittels mindestens einer Aufhängungsstruktur an und/oder über mindestens einer in einem Substrat ausgebildeten Kaverne aufgehängt ist, zwischen dessen Drain-Kontakt und dessen Source-Kontakt und/oder zwischen dessen Gate-Kontakt und dessen Source-Kontakt angelegt. Vorzugsweise wird an den mindestens einen MOSFET eine Betreiberspannung größer Null und kleiner als eine für den mindestens einen jeweiligen MOSFET vorgegebene Schwellspannung angelegt. Auch mittels des hier beschriebenen Verfahrens kann somit eine gute Temperatursensitivität oder Strahlungsnachweisgenauigkeit erreicht werden.

In einem Verfahrensschritt S11 wird die Information bezüglich der Temperatur und/oder der Strahlung unter Berücksichtigung mindestens eines Drainstroms des mindestens einen MOSFET festgelegt.

In einer vorteilhaften Ausführungsform des Verfahrens wird zuerst ein erster Spannungswert größer Null an den mindestens einen MOSFET als Betreiberspannung angelegt. Sofern der mindestens eine Drainstrom außerhalb mindestens eines vorgegebenen Normalwertebereichs liegt, wird der Verfahrensschritt S10 wiederholt, wobei die an den mindestens einen MOSFET angelegte Betreiberspannung von dem ersten Spannungswert größer Null auf einen zweiten Spannungswert größer Null gesteigert oder reduziert wird. Danach wird unter Berücksichtigung des zweiten Spannungswerts eine Auswerterelation aus einer Wertemenge mit mindestens zwei Auswerterelationen ausgewählt. Die Information wird in dem nachfolgenden Verfahrensschritt S11 unter Berücksichtigung des mindestens einen bei dem zweiten Spannungswert ermittelten Drainstroms und der ausgewählten Auswerterelation festgelegt.

Auch bei der Ausführung des hier beschriebenen Verfahrens kann eine Temperatursensitivität Tcc bei bis zu 10 %/K liegen.

**Patentansprüche**

1.   Sensorvorrichtung mit
     einem Substrat (10) mit mindestens einer darin ausgebildeten Kaverne (12),
     mindestens einer temperatursensitiven Sensoreinrichtung (14), welche mittels mindestens einer die mindestens eine zugeordnete Kaverne (12) zumindest teilweise überspannenden Aufhängungsstruktur (16) an und/oder über der mindestens einen zugeordneten Kaverne (12) aufgehängt ist, wobei die mindestens eine temperatursensitive Sensoreinrichtung (14) derart ausgebildet ist, dass mindestens eine elektrische Eigenschaft der jeweiligen temperatursensitiven Sensoreinrichtung (14) bei einer Variierung einer an und/oder in der jeweiligen temperatursensitiven Sensoreinrichtung (14) und/oder der mindestens einen zugeordneten Kaverne vorliegenden Temperatur variiert, und
     einer Betreiberelektronik (18), an welche mindestens ein Stromsignal (Id) von der mindestens einen temperatursensitiven Sensoreinrichtung (14) bereitstellbar ist, welches bei einer Variierung der mindestens einen elektrischen Eigenschaft der jeweiligen temperatursensitiven Sensoreinrichtung (14) variierbar ist, wobei die Betreiberelektronik (18) dazu ausgelegt ist, unter Berücksichtigung des mindestens einen Stromsignals (Id) eine Information bezüglich einer Temperatur und/oder bezüglich einer Strahlung festzulegen und auszugeben
     **dadurch gekennzeichnet, dass**
     die mindestens eine temperatursensitive Sensoreinrichtung (14) jeweils mindestens einen MOSFET (20) umfasst, und
     die Betreiberelektronik (18) dazu ausgelegt ist, jeweils eine Betreiberspannung (Uds, Ugs) des mindestens einen MOSFET (20) zwischen dessen Drain-Kontakt (26) und dessen Source-Kontakt (22) und/oder zwischen dessen Gate-Kontakt (24) und dessen Source-Kontakt (22) anzulegen und unter Berücksichtigung mindestens eines Drainstroms (Id) des mindestens einen MOSFET (20) als das mindestens eine Stromsignal (Id) die Information festzulegen und auszugeben.

2.   Sensorvorrichtung nach Anspruch 1, wobei die Betreiberelektronik (18) zusätzlich dazu ausgelegt ist, an den mindestens einen MOSFET (20) der mindestens einen temperatursensitiven Sensoreinrichtung (14) eine Betreiberspannung (Uds, Ugs) größer Null und kleiner als eine für den mindestens einen jeweiligen MOSFET (20) vorgegebene Schwellspannung (Ut) anzulegen.

3.   Sensorvorrichtung nach Anspruch 1 oder 2, wobei die Betreiberelektronik (18) zusätzlich dazu ausgelegt ist, an den mindestens einen MOSFET (20) der mindestens einen temperatursensitiven Sensoreinrichtung (14) unterschiedliche Spannungswerte größer Null als Betreiberspannung (Uds, Ugs) anzulegen, und unter Berücksichtigung des als Betreiberspannung (Uds, Ugs) angelegten Spannungswerts eine Auswerterelation aus einer Wertemenge mit mindestens zwei Auswerterelationen auszuwählen, und die Information unter Berücksichtigung des mindestens einen Drainstroms (Id) und der ausgewählten Auswerterelation festzulegen.

4.   Sensorvorrichtung nach einem der vorhergehenden Ansprüche, wobei der mindestens eine MOSFET (20) der mindestens einen temperatursensitiven Sensoreinrichtung (14) ein selbstsperrender n-Kanal MOSFET (20) ist.

5.   Sensorvorrichtung nach einem der vorhergehenden Ansprüche, wobei der mindestens eine MOSFET (20) der gleichen temperatursensitiven Sensoreinrichtung (14) so ausgebildet ist, dass dessen Gate-Kontakt (24) und dessen Drain-Kontakt (26) auf einem gleichen Potential liegen.

6.   Sensorvorrichtung nach einem der vorhergehenden Ansprüche, wobei an dem mindestens eine MOSFET (20) der gleichen temperatursensitiven Sensoreinrichtung (14) ausschließlich zwei Leitungen (36) münden.

7.   Sensorvorrichtung nach einem der vorhergehenden Ansprüche, wobei die Sensorvorrichtung ein Temperatursensorbauteil, ein Temperatursensor, ein Strahlungssensorbauteil, ein Strahlungssensor, ein Infrarotsensorbauteil, ein Infrarotsensor und/oder eine Wärmebildkamera ist.

8.   Herstellungsverfahren für eine Sensorvorrichtung mit den Schritten:

     Ausbilden mindestens einer temperatursensitiven Sensoreinrichtung (14) der Sensorvorrichtung, welche mittels mindestens einer Aufhängungsstruktur (16) an und/oder über mindestens einer in einem Substrat (10) ausgebildeten Kaverne (12) aufgehängt wird, wobei die mindestens eine temperatursensitive Sensoreinrichtung (14) derart ausgebildet wird, dass mindestens eine elektrische Eigenschaft der jeweiligen temperatursensitiven Sensoreinrichtung (14) bei einer Variierung einer an und/oder in der jeweiligen temperatursensitiven Sensoreinrichtung (14) und/oder der mindestens einen zugeordneten Kaverne (12) vorliegenden Temperatur variiert; und

Ausbilden einer Betreiberelektronik (18) derart, dass bei einem Betrieb der Sensorvorrichtung mindestens ein Stromsignal (Id) von der mindestens einen temperatursensitiven Sensoreinrichtung (14) an die Betreibereinrichtung (18) bereitstellbar ist, welches bei einer Variierung der mindestens einen elektrischen Eigenschaft der jeweiligen temperatursensitiven Sensoreinrichtung (14) variiert, wobei die Betreiberelektronik (18) dazu ausgelegt wird, bei dem Betrieb der Sensorvorrichtung unter Berücksichtigung des mindestens einen Stromsignals (Id) eine Information bezüglich einer Temperatur und/oder bezüglich einer Strahlung festzulegen und auszugeben;

**dadurch gekennzeichnet, dass**

die mindestens eine temperatursensitive Sensoreinrichtung (14) jeweils mit mindestens einem MOSFET (20) ausgebildet wird (S1); und die Betreiberelektronik (18) dazu ausgelegt wird, bei dem Betrieb der Sensorvorrichtung jeweils eine Betreiberspannung (Uds, Ugs) des mindestens einen MOSFET (20) zwischen dessen Drain-Kontakt (26) und dessen Source-Kontakt (22) und/oder zwischen dessen Gate-Kontakt (24) und dessen Source-Kontakt (22) anzulegen und unter Berücksichtigung mindestens eines Drainstroms (Id) des mindestens einen MOSFET (20) als das mindestens eine Stromsignal (Id) die Information festzulegen und auszugeben (S2).

9. Verfahren zum Ermitteln einer Information bezüglich einer Temperatur und/oder bezüglich einer Strahlung mit den Schritten:

Anlegen einer Betreiberspannung (Uds, Ugs) an mindestens einen MOSFET (20), welcher mittels mindestens einer Aufhängungsstruktur (16) an und/oder über mindestens einer in einem Substrat (10) ausgebildeten Kaverne (12) aufgehängt ist, zwischen dessen Drain-Kontakt (26) und dessen Source-Kontakt (22) und/oder zwischen dessen Gate-Kontakt (24) und dessen Source-Kontakt (22) (S10); und Festlegen der Information bezüglich der Temperatur und/oder der Strahlung unter Berücksichtigung mindestens eines Drainstroms (Id) des mindestens einen MOSFET (20) (S11).

10. Verfahren nach Anspruch 9, wobei an den mindestens einen MOSFET (20) eine Betreiberspannung (Uds, Ugs) größer Null und kleiner als eine für den mindestens einen jeweiligen MOSFET (20) vorgegebene Schwellspannung (Ut) angelegt wird.

11. Verfahren nach Anspruch 9 oder 10, wobei, sofern der mindestens eine Drainstrom (Id) außerhalb mindestens eines vorgegebenen Normalwertebereichs liegt, die an den mindestens einen MOSFET (20) angelegte Betreiberspannung (Uds, Ugs) von einem ersten Spannungswert größer Null auf einen zweiten Spannungswert größer Null gesteigert oder reduziert wird, und wobei unter Berücksichtigung des zweiten Spannungswerts eine Auswerterelation aus einer Wertemenge mit mindestens zwei Auswerterelationen ausgewählt wird, und die Information unter Berücksichtigung des mindestens einen bei dem zweiten Spannungswert ermittelten Drainstroms (Id) und der ausgewählten Auswerterelation festgelegt wird.

# Fig. 1a

# Fig. 1b

# Fig. 1c

# Fig. 1d

# Fig. 2

**Fig. 3**

```
┌──────────────────────────────────────┐
│                                      │  ⟲ S1
└──────────────────────────────────────┘
                   ↕
┌──────────────────────────────────────┐
│                                      │  ⟲ S2
└──────────────────────────────────────┘
```

**Fig. 4**

```
┌──────────────────────────────────────┐
│                                      │  ⟲ S10
└──────────────────────────────────────┘
                   ↓
┌──────────────────────────────────────┐
│                                      │  ⟲ S11
└──────────────────────────────────────┘
```

| | Europäisches Patentamt<br>European Patent Office<br>Office européen des brevets | **EUROPÄISCHER RECHERCHENBERICHT** | **Nummer der Anmeldung**<br>EP 15 15 7837 |
|---|---|---|---|

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 2 573 530 A2 (FRAUNHOFER GES FORSCHUNG [DE]) 27. März 2013 (2013-03-27)<br>* Abbildung 5 *<br>* Absätze [0003], [0037], [0040] *<br>----- | 1-4,7-11 | INV.<br>G01J5/20 |
| A | CHI-WOO LEE ET AL: "High-Temperature Performance of Silicon Junctionless MOSFETs",<br>IEEE TRANSACTIONS ON ELECTRON DEVICES, IEEE SERVICE CENTER, PISACATAWAY, NJ, US,<br>Bd. 57, Nr. 3, 1. März 2010 (2010-03-01), Seiten 620-625, XP011300671,<br>ISSN: 0018-9383<br>* Abbildungen 2, 4 *<br>----- | 2-4,10,11 | |
| X | US 2012/091342 A1 (BERGER ISRAEL [IL] ET AL) 19. April 2012 (2012-04-19)<br>* Abbildungen 6, 12 *<br>* Absatz [0047] *<br>----- | 1,5,6 | |
| X | US 2009/321641 A1 (PARK KUN SIK [KR] ET AL) 31. Dezember 2009 (2009-12-31)<br>* das ganze Dokument *<br>----- | 1,8,9 | **RECHERCHIERTE SACHGEBIETE (IPC)**<br><br>G01J |

Der vorliegende Recherchenbericht wurde für alle Patentansprüche erstellt

| Recherchenort | Abschlußdatum der Recherche | Prüfer |
|---|---|---|
| München | 5. August 2015 | Parise, Berengere |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 15 15 7837

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

05-08-2015

| Im Recherchenbericht angeführtes Patentdokument | Datum der Veröffentlichung | Mitglied(er) der Patentfamilie | Datum der Veröffentlichung |
|---|---|---|---|
| EP 2573530 A2 | 27-03-2013 | DE 102011081641 A1<br>EP 2573530 A2<br>US 2013056733 A1 | 28-02-2013<br>27-03-2013<br>07-03-2013 |
| US 2012091342 A1 | 19-04-2012 | KEINE | |
| US 2009321641 A1 | 31-12-2009 | JP 2009109473 A<br>KR 20090044181 A<br>US 2009321641 A1 | 21-05-2009<br>07-05-2009<br>31-12-2009 |

EPO FORM P0461

Für nähere Einzelheiten zu diesem Anhang : siehe Amtsblatt des Europäischen Patentamts, Nr.12/82

**EP 2 924 403 A1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006028435 A1